# EUROPÄISCHE PATENTANMELDUNG

(11) **EP 1 416 160 A2**
(43) Veröffentlichungstag der Anmeldung: **06.05.2004**
(21) Anmeldenummer: 03450229.4
(22) Anmeldetag: 15.10.2003
(51) Int. Cl.: F04B 51/00

(54) **Monitor zur Überwachung der Bewegungsbahn eines Hubkolbens**

(30) Priorität: 30.10.2002 AT 16372002
(71) Anmelder: Hoerbiger Kompressortechnik Services GmbH, 1040 Wien (AT)
(72) Erfinder: Spiegel, Bernhard, 1030 Wien (AT); Steinrück, Peter, 4830 Hallstatt (AT); Murhammer, Jürgen, 3130 Herzogenburg (AT)
(74) Vertreter: Pinter, Rudolf, Dipl.-Ing.

(57) **Zusammenfassung**

Zur Überwachung der Lage der Bewegungsbahn eines Kolbens (1) relativ zu einem Zylinder (2) ist im Bereich eines der Totpunkte der Kolbenbewegung ein feststehend angeordneter Sensor (4) vorgesehen, der den seitlichen Abstand (a) zu einer am Kolben (1) angeordneten Indikatoreinheit (6) misst. Um eine robuste und genaue Anordnung zu ermöglichen, ist der Sensor (4) relativ zur inneren Oberfläche des Zylinders (2) zurückgezogen angeordnet und mittels einer Abdeckung (8) zum Zylinderinnenraum (9) hin abgedichtet und die Indikatoreinheit (6) am Kolben (1) als verschmutzungsunempfindliche Anomalie (10) im Bereich der Stirnseite (11) des Kolbens (1) ausgebildet.

## Beschreibung

Die Erfindung betrifft einen Monitor zur Überwachung der Lage der Bewegungsbahn eines Hubkolbens relativ zum ihn umgebenden Zylinder, mit einem relativ zum Zylinder im Bereich eines der Totpunkte der Kolbenbewegung feststehend angeordneten, und mit einer Auswerteeinheit in Verbindung stehenden Sensor, und einer im Bereich der Stirnseite des Kolbens angeordneten Indikatoreinheit, welche sich im Bereich des Totpunktes der Kolbenbewegung in einem vom Sensor detektierbaren und von der Auswerteeinheit zur Bestimmung der relativen Lage der Bewegungsbahn des Kolbens auswertbaren seitlichen Abstand zum Sensor befindet.

Anordnungen der genannten Art werden bei Hubkolbenmaschinen und insbesonders Hubkolben-Verdichtern verwendet, um eine metallische Berührung von Kolben und Zylinderwand, die zu vorzeitigem Versagen und teuren Schäden führen kann, mit Sicherheit zu verhindern. Die grundsätzlich für diese Aufgabe vorgesehene Lagerung bzw. Führung des Hubkolbens mittels separater Tragringe oder eigener Kolbenführungen unterliegt vor allem bei trockenlaufenden Kolbenkompressoren entsprechendem Verschleiß, der laufzeitbestimmend ist. Auch bei geschmierten Kolbenmaschinen ist eine entsprechende Überwachung erforderlich, um im Falle eines Ausfalls der Schmierung oder bei abrasivem Verschleiß zufolge Festkörperabriebs kostspielige Schäden an Kolben und Laufbüchsen mit hohen Stillstandszeiten zu verhindern. Für eine zustandsabhängige Wartung ist eine Prognose des Verschleißes der Führungen bzw. Tragringe oder dergleichen erforderlich, damit die zur Verfügung stehende Restlaufzeit aussagekräftig abgeschätzt werden kann. Bei Unterschreitung eines gewissen Mindestabstandes zwischen Kolben und Zylinderinnenwand ist zumeist als Maschinenschutz eine Abschaltung vorzusehen.

Direkte Messungen des Kolbenabstandes zur Zylinderinnenwand, wie sie beispielsweise aus US 6,318,147 B1 oder auch US 4,143 319 A bekannt sind, werden bisher wegen der Ausgesetztheit der Meßstelle (Druck, Temperatur, Schmutz, Korrosion, Explosionsgefahr und dergleichen) und der damit einhergehenden Nachteile praktisch nicht angewandt. Bekannt ist beispielsweise aus US 4,987,774 A die Messung bzw. Überwachung des Verschleißes von Tragringen von Kolbenkompressoren mit horizontal liegenden Zylindern durch Bestimmung der Kolbenstangenabsenkung mittels Wirbelstromsensoren. Die Messung erfolgt mittels eines an einer relativ leicht zugänglichen Stelle außerhalb des Zylinders angeordneten Sensors, wobei durch Triangulation des Meßwertes dann eine Zuordnung zum interessierenden Abstand zwischen dem auf der Kolbenstange angeordneten Kolben und der Zylinderinnenwand erfolgt. Aufgrund der Fehlerverstärkung durch die notwendige Triangulation sowie negativer Einflüsse der Bewegung des Kreuzkopfes, der Biegung der Kolbenstange durch am Kolben angreifende Momente, von Schwingungen der Kolbenstange, unterschiedlichen magnetischen und elektrischen Eigenschaften der Kolbenstangenoberfläche zufolge von Beschichtungen, und dergleichen, ist diese Methode relativ ungenau und liefert nur relativ unzuverlässige Aussagen, die eine Verwendung für den Maschinenschutz nicht zulassen. Für genaue Messungen wäre darüber hinaus eine aufwendige Temperaturkompensation der Meßsignale des den Abstand der vorbeistreichenden Kolbenstange überwachenden Wirbelstromsensors erforderlich, was in der Praxis weitere Schwierigkeiten macht.

Aus JP-62-151703 A ist weiters eine Methode bzw. Vorrichtung der eingangs genannten Art bekannt, die einen prinzipiellen Genauigkeitsvorteil deswegen hat, weil eine allfällige Berührung zwischen Kolben und Zylinderinnenwand bei Hubkolbenmaschinen der hier interessierenden Art im allgemeinen zuerst am äußeren, deckelseitigen Ende des Kolbens erfolgt, womit die Bestimmung der radialen Verschiebung des Kolbens bzw. eines damit fix verbundenen Bauteils (wie etwa der durch den Kolben ragenden Kolbenstange) im Bereich des zugehörigen Totpunktes der Bewegungsbahn in einer zur Kolbenachse im wesentlichen orthogonalen Ebene grundsätzliche Vorteile hat. Bei der aus der genannten Schrift bekannten Anordnung ist im Zylinderkopf ein optischer Sensor vorgesehen, der die Reflexion eines auf eine Indikatoreinheit an der Stirnfläche der Kolbenstange gerichteten Lichtstrahls auswertet, welcher von konzentrisch angeordneten Vertiefungen und Erhebungen der Indikatoreinheit bei einer Auswanderung derselben entsprechend abgeändert reflektiert wird. Ein Nachteil dieser bekannten Anordnung ist im wesentlichen darin zu sehen, daß die optische Messung der Lichtreflexion bzw. das daraus abgeleitete Messsignal extrem anfällig für Verschmutzungen am Sensor und an der Indikatoreinheit ist, sodass die erhaltenen Messergebnisse wiederum nur relativ unzuverlässige Aussagen über die tatsächliche Lage der Bewegungsbahn des Kolbens relativ zum Zylinder liefern. Weiters ist der Sensor auch unmittelbar den an der Messstelle herrschenden ungünstigen Umgebungsbedingungen (Druck, Temperatur, Korrosion und dergleichen) ausgesetzt, was in der Praxis neben den Problemen mit der Abdichtung der nach außen durchgehenden Aufnahmebohrung für den Sensor im Zylinderkopf auch die Lebensdauer derartiger Anordnungen stark herabsetzt bzw. den Einsatzbereich stark einschränkt.

Aufgabe der vorliegenden Erfindung ist es, eine Anordnung der eingangs genannten Art so zu verbessern, daß die beschriebenen Nachteile der bekannten Anordnung vermieden werden und dass insbesonders auf einfache und robuste Weise die Lage der Bewegungsbahn des Hubkolbens relativ zum Zylinder bzw. deren räumliche Veränderung festgestellt werden kann, um eine zuverlässige Bestimmung des Abstandes des Kolbens zur umgebenden Zylinderwand zu ermöglichen.

Diese Aufgabe wird gemäß der vorliegenden Erfindung bei einer Anordnung der eingangs genannten Art dadurch gelöst, daß der Sensor relativ zur inneren Oberfläche des Zylinders zurückgezogen angeordnet und mittels einer Abdeckung zum Zylinderraum hin abgedichtet ist, und dass die Indikatoreinheit als verschmutzungsunempfindliche Anomalie ausgebildet ist.

Diese Ausbildung sichert nun auf einfache Weise, dass der Sensor geschützt von den im Zylinderraum herrschenden ungünstigen Umgebungsbedingungen angeordnet ist und trotzdem aussagekräftige, genaue Messergebnisse bezüglich der Lage der Bewegungsbahn des Kolbens relativ zum Zylinder liefert. An sich bekannt ist dabei z.B. aus DE 25 43 078 A1 die Anordnung eines seitlich am Zylinder sitzenden Sensors, der relativ zur inneren Oberfläche des Zylinders zurückgezogen und mittels einer Abdeckung zum Zylinderraum abgedichtet ist. Die Abdeckung ist nun bevorzugt in einer für den jeweils konkret verwendeten Sensor möglichst neutralen und das Messergebnis nicht oder nur wenig beeinflussenden Weise auszuführen, beispielsweise membranartig dünn aus einem das jeweilige Messprinzip möglichst nicht beeinflussenden Werkstoff. Die unmittelbare Messung des seitlichen Abstandes eines Punktes im Bereich der Stirnfläche des Kolbens relativ zur feststehenden Zylinderwand erlaubt zusammen mit der robusten und von Umgebungseinflüssen abgeschirmten Ausbildung und Anordnung des Sensors und der Indikatoreinheit eine aussagekräftige und genaue Messung der Kolbenlage, die alle Anforderungen der eingangs angesprochenen Art und insbesonders auch die des Maschinenschutzes erfüllt.

Gemäß einer besonders bevorzugten Ausgestaltung der Erfindung ist vorgesehen, daß mehrere, senkrecht zur Kolbenachse beabstandete und/oder mit senkrecht zur Kolbenachse beabstandeten separaten Indikatorelementen der Indikatoreinheit zusammenwirkende, separat von der Auswerteeinheit abfragbare Sensorelemente vorgesehen sind. Damit ist nun auf sehr einfache Weise eine Bestimmung bzw. Überwachung der räumlichen Lage des Endpunktes der Bewegungsbahn des Kolbens relativ zum ihn umgebenden Zylinder möglich, sodass nicht nur die Kolbenabsenkung bei einem liegend angeordneten Zylinder sondern generell ein Auswandern der Bewegungsbahn des Kolbens in beliebige Richtung seitlich zur Hubachse detektiert und überwacht werden kann. Dies ist beispielsweise für stehende Zylinder, Zylinder mit berührungsloser Labyrinthabdichtung des Kolbens, oder ähnliche Aufgaben bzw. Anordnungen vorteilhaft.

In weiterer Ausgestaltung der Erfindung ist vorgesehen, dass die Sensorelemente nach unterschiedlichen Messprinzipien arbeitend ausgebildet sind. Damit kann der Überwachungsmonitor speziell auf die jeweilige Aufgabe zugeschnitten ausgeführt werden - es können beispielsweise Wirbelstromsensoren kombiniert mit induktiven oder kapazitiven Sensoren eingesetzt werden, wobei die Vor- bzw. Nachteile der einzelnen Messprinzipien gezielt für den jeweiligen Einsatzzweck kombiniert bzw. kompensiert werden können.

In besonders bevorzugter weiterer Ausgestaltung der Erfindung ist vorgesehen, dass die Indikatoreinheit als räumliche Anomalie im Bereich der Stirnseite des Kolbens ausgebildet ist, deren relativer seitlicher Abstand zu zumindest zwei, vorzugsweise als Wirbelstromsensoren ausgebildeten Sensorelementen von der Auswerteeinheit zur Bestimmung der räumlichen Lage des Totpunktes der Bewegungsbahn des Kolbens auswertbar ist. Dies ergibt eine besonders einfache und robuste Ausführung des Überwachungsmonitors, wobei die genannte räumliche Anomalie beispielsweise als vorstehender Zapfen, topfartige Vertiefung oder Ähnliches an der Stirnseite des Kolbens oder an der durch den Kolben durchstehenden Stirnfläche der Kolbenstange ausgebildet sein kann.

Nach einer anderen vorteilhaften Ausführungsform der Erfindung kann die Indikatoreinheit aber auch zumindest ein, vorzugsweise unter Bildung einer glatten Oberfläche im Bereich der Stirnfläche des Kolbens oder der Kolbenstange eingesetztes Magnetelement aufweisen, wobei zumindest eines der Sensorelemente als magnetischer Feldsensor, der die Neigung der detektierten magnetischen Feldlinien in ein Messsignal wandelt, ausgebildet ist. Auch diese Anordnung ermöglicht genaue und aussagekräftige Messungen der räumlichen Lage des Endpunktes der Bewegungsbahn des Kolbens relativ zum Zylinder mit einfachen und gegenüber den herrschenden Umgebungsbedingungen unempfindlichen Mitteln.

Das bzw. die Sensorelement(e) ist/sind in besonders bevorzugter Ausgestaltung der Erfindung in einem im Zylinderkopf abgedichtet eingesetzten Adapter angeordnet. Dies ermöglicht die Verwendung spezieller Werkstoffe bzw. besonderer Abdichtungen und dergleichen für die Sensoraufnahme bzw. auch die Bereitstellung einfach montierbarer und austauschbarer Überwachungsmonitor-Einheiten.

Im Bereich der Stirnseite des Kolbens oder der Kolbenstange ist gemäß einer anderen vorteilhaften Ausgestaltung der Erfindung zumindest ein, vorzugsweise separat aufgesetzter Messansatz als räumlich vorragende Indikatoreinheit angeordnet, der im Bereich des Totpunktes der Bewegungsbahn des Kolbens in zumindest eine nach außen abgedichtet in den Zylinderkopf als Adapter eingesetzte Messpatrone eintaucht, in welcher zumindest ein seitlich auf den Messansatz gerichtetes Sensorelement angeordnet ist. Dies ergibt eine konstruktiv einfache und robuste Ausführung des Überwachungsmonitors, bei der das Sensorelement in der Messpatrone sehr wirkungsvoll vom Zylinderinnenraum bzw. den dort üblicherweise herrschenden ungünstigen Umgebungsbedingungen abgeschirmt ist und trotzdem durch die im wesentlichen senkrecht zur Hubrichtung des Kolbens erfolgende seitliche Abstandsmessung sehr genaue und aussagekräftige Messungen ermöglicht. Der Messansatz taucht im Bereich des Totpunktes der Bewegungsbahn des Kolbens in die Messpatrone ein, was auf einfachste Weise weiters auch die Verwendung dieses Überwachungsmonitors als Totpunktsensor erlaubt. Da das Messsignal beispielsweise eines Wirbelstromsensors bei nicht in die Messpatrone eingetauchtem Messansatz (und speziell dann, wenn sich der Kolben im Bereich des anderen, unteren Totpunktes der Bewegungsbahn befindet) praktisch dem Falle der unendlichen Entfernung zwischen Sensorelement und Messansatz entspricht, kann bei einer derartigen Anordnung sehr einfach auch eine Temperaturkompensation durch Vergleich des Messwertes mit dem Sensorsignal bei im unteren Totpunkt befindlichem Kolben vorgenommen werden.

Der Messansatz kann zumindest in dem Bereich, der im Bereich des Totpunktes der Bewegungsbahn des Kolbens dem/den Sensorelement(en) gegenüberliegt, in Form eines Zylinders mit parallel zur Kolbenachse liegender Erzeugender ausgebildet sein, wobei das/die Sensorelement(e) im wesentlichen den radialen Abstand in einer zur Kolbenachse normalen Ebene erfasst (erfassen). Dies ergibt einen bedarfsweise symmetrischen Aufbau der Anordnung bzw. ermöglicht eine einfache und montage- und wartungsfreundliche Ausbildung des Überwachungsmonitors.

In bevorzugter weiterer Ausgestaltung der Erfindung kann der zuletzt erwähnte zylindrische Messansatz an seiner im Bereich des Totpunktes der Bewegungsbahn des Kolbens dem Sensorelement zugewandten Seite, eine ebene, im wesentlichen senkrecht zur Verbindungslinie zum Sensorelement ausgerichtete Oberfläche aufweisen, was den Vorteil bietet, dass geringfügige, in Richtung dieser ebenen, abgeflachten Oberfläche verlaufende seitliche Kolbenverschiebungen keinen Einfluß auf das Messergebnis haben.

Die Messpatrone kann in weiterer bevorzugter Ausgestaltung der Erfindung zumindest einen zum Zylinderraum hin offenen Aufnahmekörper für die zum Zylinderraum abgedichtete Aufnahme des/der Sensorelement(e)s aufweisen, der zumindest im jeweils zwischen Sensorelement und eingetauchtem Messansatz liegenden Bereich membranartig dünn aus die Sensorempfindlichkeit nicht bzw. wenig beeinflussendem Material ausgebildet ist. Bei Ausbildung des Sensorelementes als Wirbelstromsensor ist dabei der Aufnahmekörper, bzw. zumindest der membranartige Bereich desselben, aus Kunststoff, vorzugsweise faserverstärkt, ausgebildet. Dieser Aufnahmekörper kann dann seinerseits relativ einfach im Zylinderkopf eingesetzt und abgedichtet werden, was Aufbau, Montage und Wartung des Überwachungsmonitors sehr vereinfacht und auch die nachträgliche Anbringung eines derartigen Monitors beispielsweise an einem Hubkolbenkompressor sehr vereinfacht.

In besonders bevorzugter weiterer Ausgestaltung der Erfindung ist vorgesehen, dass das/jedes Sensorelement im Aufnahmekörper im wesentlichen hohlraumlos und den Aufnahmekörper damit von innen gegen den Zylinderdruck stützend angeordnet ist. Dies ermöglicht die Verwendung dünn ausgebildeter Abdeckungen bzw. Membranen als Abschirmung des Sensors bzw. Sensorelementes gegen die im Zylinderinnenraum herrschenden Umgebungsbedingungen, da die Abdeckung selbst die beispielsweise im Verdichtungsraum eines Hubkolbenkompressors herrschenden hohen Drücke nicht bzw. zumindest nicht alleine tragen muss.

Zur Überwachung der Abnützung von auf dem Kolben angeordneten Tragringen dient der mit dem erfindungsgemäßen Überwachungsmonitor ermittelte seitliche Abstand zwischen Sensor und Indikatoreinheit im Bereich des Totpunktes der Bewegungsbahn des Kolbens unmittelbar als Verschleißindikator, was die einfache Verwendung eines derartigen Monitors beispielsweise auch als Maschinenschutz zur Einleitung einer Abschaltung ermöglicht.

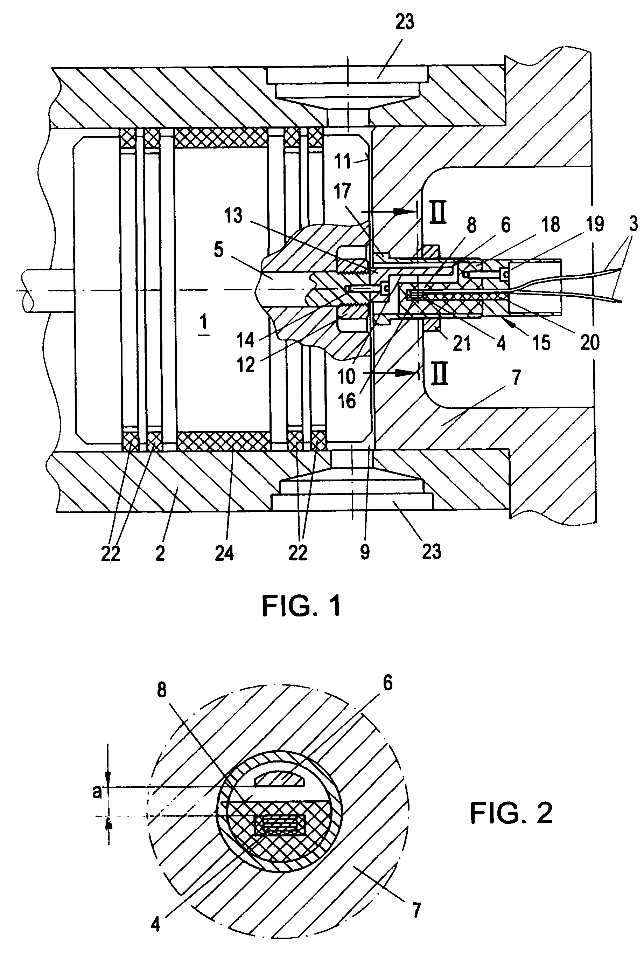

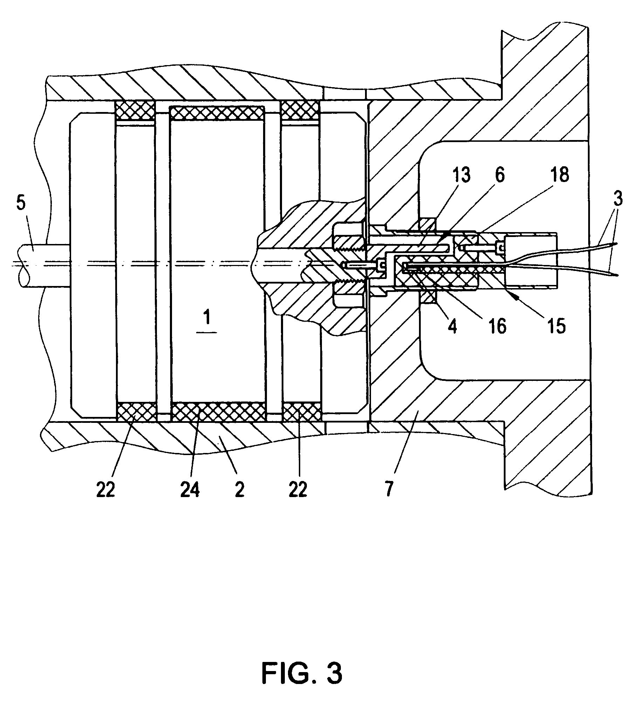

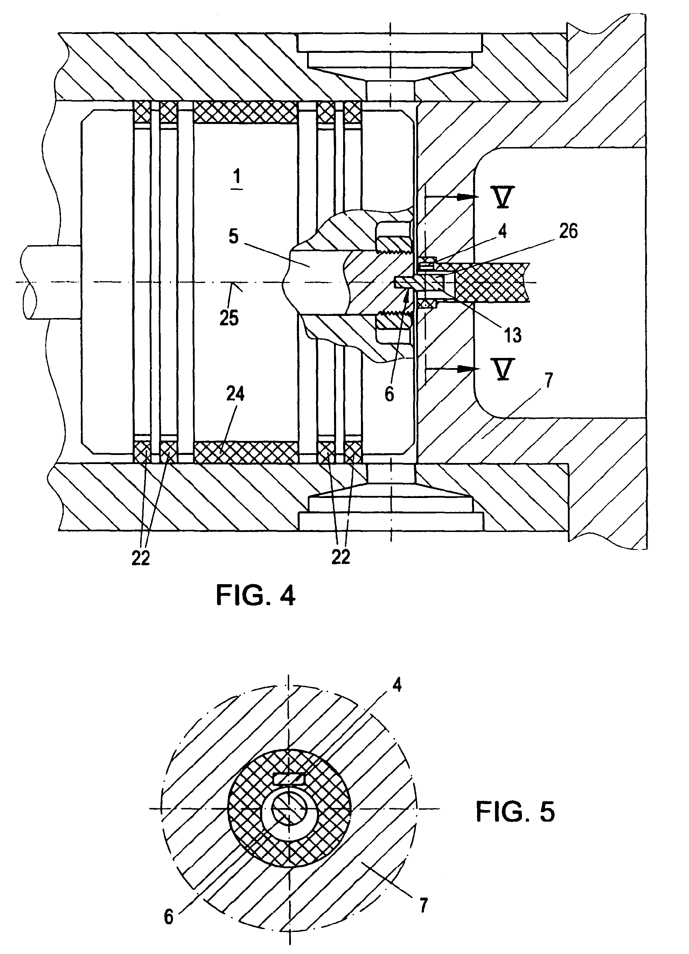

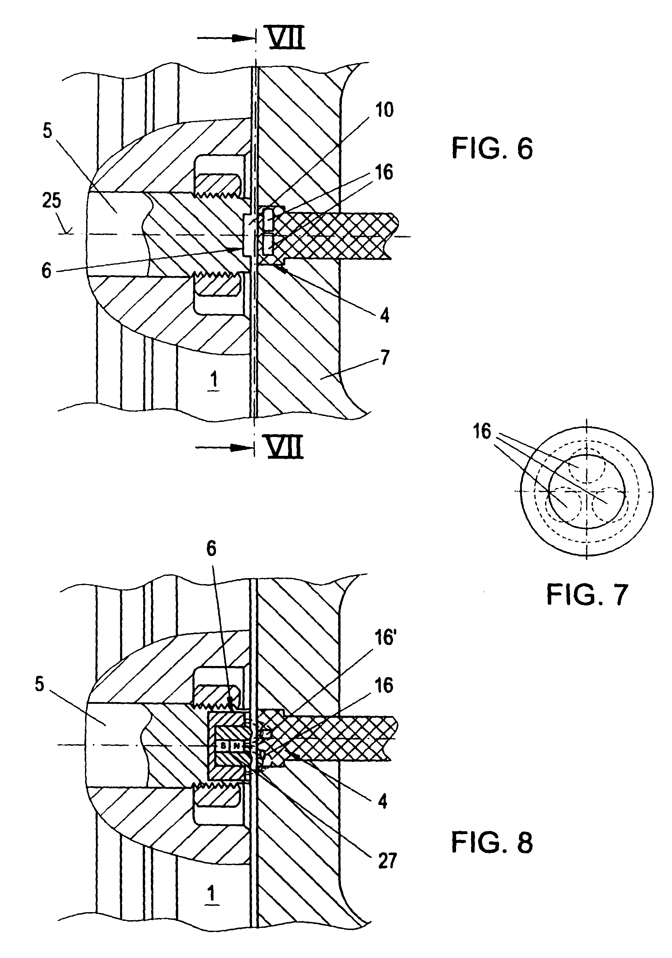

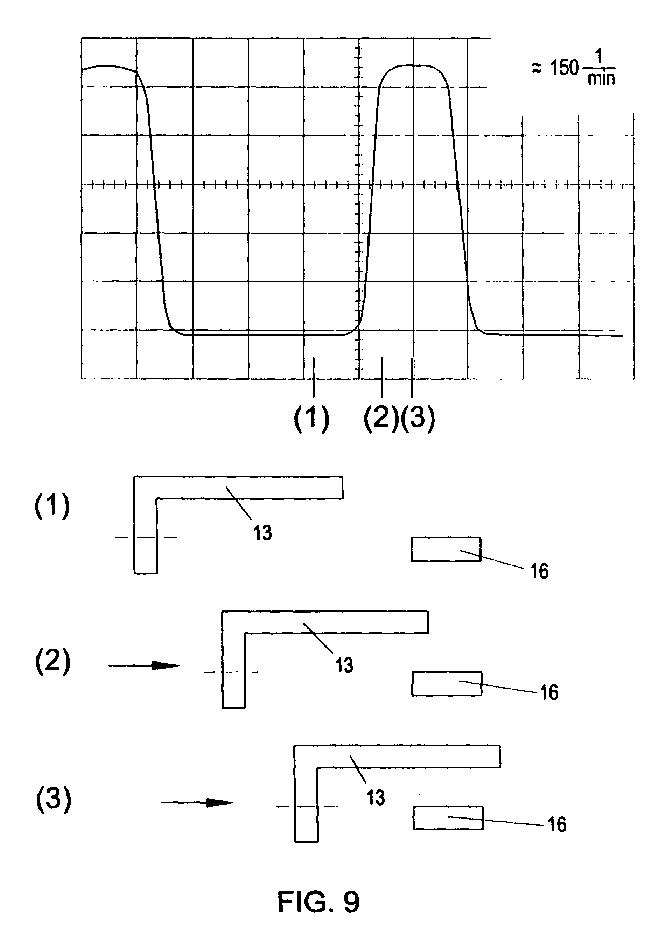

Die Erfindung wird im folgenden anhand der in der Zeichnung schematisch dargestellten Ausführungsbeispiele erläutert. Fig. 1 zeigt dabei einen teilweisen Schnitt durch einen Hubkolbenkompressor (ausgerüstet mit einem erfindungsgemäßen Überwachungsmonitor) im Bereich eines Zylinderkopfes mit dem Kolben im oberen Totpunkt, Fig. 2 einen teilweisen Schnitt entlang der Linie II - II in Fig. 1, Fig. 3 die Anordnung aus den Fig. 1 und 2 im Zustand des fortgeschrittenen Verschleißes des Tragringes am Kolben, Fig. 4 ein anderes Ausführungsbeispiel nach der Erfindung in einer den Fig. 1 bzw. 3 entsprechenden Darstellung, Fig. 5 den Schnitt V-V in Fig. 4, Fig. 6 ein Detail aus einem weiteren Ausführungsbeispiel nach der Erfindung, Fig. 7 einen Detailschnitt entlang der Linie VII-VII in Fig. 6, Fig. 8 ein weiteres Ausführungsbeispiel nach der Erfindung in einer beispielsweise Fig. 6 entsprechenden Darstellung und Fig. 9 die schematische Darstellung verschiedener Kolbenpositionen einer Anordnung nach den Fig. 1 bis 3 mit exemplarischen Messergebnissen des Überwachungsmonitors.

Alle der dargestellten Anordnungen dienen als Monitor zur Überwachung der Lage der Bewegungsbahn eines Kolbens 1 relativ zum ihn umgebenen Zylinder 2 und weisen einen relativ zum Zylinder 2 im Bereich des oberen Totpunktes der Bewegung des Kolbens 1 feststehend angeordneten, über ein Anschlusskabel 3 mit einer hier nicht dargestellten Auswerteeinheit in Verbindung stehenden Sensor 4 sowie eine am Kolben 1 bzw. an einem damit fix verbundenen Bauteil, wie hier der Kolbenstange 5, angeordnete Indikatoreinheit 6 auf, welche sich im Bereich des Totpunktes der Bewegung des Kolbens 1 in einem vom Sensor 4 detektierbaren und damit von der Auswerteeinheit zur Bestimmung der relativen Lage der Bewegungsbahn des Kolbens 1 auswertbaren seitlichen Abstand a zum Sensor 4 befindet. Der Sensor 4 ist in allen Ausführungsvarianten relativ zur inneren Oberfläche des Zylinders 2 (bzw. hier Zylinderkopfes 7) zurückgezogen angeordnet und mittels einer membranartigen Abdeckung 8 zum Zylinderinnenraum 9 hin abgedichtet. Die Indikatoreinheit 6 ist als verschmutzungsunempfindliche Anomalie 10 im Bereich der Stirnseite 11 des Kolbens 1 ausgebildet.

Gemäß den Fig. 1 bis 3 ist im Bereich der Stirnseite 11 des Kolbens 1 bzw. der Kolbenstange 5 (auf der mittels einer Überwurfmutter 12 der Kolben befestigt ist) ein separat aufgesetzter Messansatz 13 als verschmutzungsunempfindliche Anomalie 10 bzw. räumlich vorragende Indikatoreinheit 6 angeordnet und mittels einer Schraube 14 befestigt. Dieser Messansatz 13 taucht im Bereich des dargestellten oberen Totpunktes der Bewegungsbahn des Kolbens 1 in eine nach außen abgedichtet in den Zylinderkopf 7 als Adapter eingesetzte Messpatrone 15 ein, in der als Sensor 4 ein seitlich auf den Messansatz 13 gerichtetes einzelnes Sensorelement 16, beispielsweise ausgebildet als Wirbelstromsensor, angeordnet ist. Der Messansatz 13 ist an seiner im Bereich des Totpunktes der Bewegungsbahn des Kolbens 1 dem Sensorelement 16 zugewandten Seite mit einer ebenen, im wesentlichen senkrecht zur Verbindungslinie zum Sensorelement 16 ausgerichteten Oberfläche ausgebildet, wie dies insbesonders aus Fig. 2 ersichtlich ist.

Die Messpatrone 15 weist einen zum Zylinderraum 9 hin offenen Aufnahmekörper 17 für die zum Zylinderraum 9 abgedichtete Aufnahme des Sensorelementes 16 auf, der zumindest in dem zwischen Sensorelement 16 und eingetauchten Messansatz 13 liegenden Bereich membranartig dünn als Abdeckung 8 aus die Sensorempfindlichkeit nicht bzw. wenig beeinflussenden Material ausgebildet ist. Der hier in den Aufnahmekörper 17 der Messpatrone 15 von der zum Zylinderinnenraum 9 hin offenen Seite her eingesetzte Membranträger 18 ist beispielsweise aus faserverstärktem Kunststoff ausgebildet und mittels einer Schraube 19 im Aufnahmekörper 17 befestigt. Von der Außenseite her ist ein Sensorträger 20 in den Aufnahmekörper 17 bzw. den Membranträger 18 eingeschoben, der zusammen mit dem eingelegten Sensor 4 bzw. Sensorelement 16 den Aufnahmekörper 17 im wesentlichen hohlraumlos ausfüllt und damit von innen her gegen den Zylinderinnendruck abstützt, womit die membranartige Abdeckung 8 relativ dünn und damit das Messsignal des Sensors 4 nicht oder nur äußerst wenig beeinflussend ausgebildet sein kann.

Die Messpatrone 15 wird von der Zylinderinnenseite her in die entsprechende Bohrung des Zylinderkopfes 7 eingeschoben und außen mittels einer Mutter 21 befestigt. Zusammen mit der einfachen Ausbildung und Befestigung des Messansatzes 13 am Kolben 1 bzw. der Kolbenstange 5 ist damit auch die nachträgliche Ausrüstung beispielsweise eines Kolbenkompressors mit dem erfindungsgemäßen Überwachungsmonitor möglich.

Der doppelwirkende Kolben 1 weist hier zwei Paare von Kolbenringen 22 auf, die zur Innenwand des Zylinders 2 hin abdichten und damit das über in den Bohrungen 23 angeordnete, hier nicht dargestellte Saug- und Druckventile gesteuerte Ansaugen und Verdichten von Arbeitsmedium ermöglichen. Zwischen den Paaren von Kolbenringen 22 ist ein Tragring 24 angeordnet, der aus im Laufe der Zeit verschleißenden Material (beispielsweise Kunststoff) besteht, womit dann der Kolben 1 der hier mit liegenden Zylindern ausgeführten Anordnung von der in Fig. 1 dargestellten ursprünglichen Lage in die in Fig. 3 dargestellte Lage absinkt. Dieses Absinken der Bewegungsbahn des Kolbens 1 wird mittels des erfindungsgemäßen Überwachungsmonitors in Form des Abstandes a (siehe Fig. 2) zwischen Messansatz 13 und Sensorelement 16 überwacht. Bei Unterschreitung eines Grenzwertes für den Abstand a bzw. den Abstand zwischen Unterseite des Kolbens 1 und benachbarter Innenwand des Zylinders 2, kann damit entweder ein Wartungssignal ausgegeben oder der Kompressor sicherheitshalber auch abgeschaltet werden.

In Fig. 9 ist anhand von drei unterschiedlichen Relativpositionen (1), (2) und (3) zwischen schematisch dargestelltem Messansatz 13 und Sensorelement 16 der entsprechende Messwert im darüber liegenden Signaldiagramm ablesbar - das Sensorelement 16 ist hier als Wirbelstromsensor ausgebildet. Es ist ersichtlich, dass bei der Relativposition (1) das Messsignal ein Minimum aufweist, welches auch bei weiter in Richtung größere Entfernung zwischen Messansatz 13 und Sensorelement 16 gehender Bewegung des Kolbens (zum unteren Totpunkt) im wesentlichen konstant bleibt und dem Sensorsignal bei unendlicher Entfernung zwischen Messansatz 13 und Sensorelement 16 entspricht. In der Relativposition (2) befindet sich der Messansatz 13 bereits im Empfindlichkeitsbereich des Sensorelementes 16, was einem in weiterer Folge rasch ansteigenden Messsignal entspricht, das im Bereich der völligen Uberdeckung von Messansatz 13 und Sensorelement 16 (Positionen (3))ein relativ flach verlaufendes Maximum erreicht. Es kann damit eine sichere Messung bzw. Überwachung des dem Relativabstand zwischen Messansatz 13 und Sensorelement 16 entsprechenden Messsignals erfolgen - bei weiterer Annäherung zwischen Messansatz 13 und Sensorelement 16 (wie in Fig. 3) dargestellt, steigt der Maximalwert des Messsignals auf leicht beobachtbare Weise an, was eine Überwachung der Lage der Bewegungsbahn des Kolbens mit großer Genauigkeit erlaubt.

Aus dem Messwertdiagramm ist auch ersichtlich, dass damit sehr leicht der obere Totpunkt der Kolbenbewegung als Mittellinie jedes Signalhubes erfassbar ist.

Bei der Ausführung nach Fig. 4 und 5 ist als einzige wesentliche Abweichung zur Ausführung nach den Fig. 1 bis 3 der Messansatz 13 als in die Stirnseite der Kolbenstange 5 eingeschraubter Zylinder 26 mit parallel zur Kolbenachse 25 liegender Erzeugender ausgeführt, wobei das Sensorelement 16 wiederum den radialen Abstand in einer zur Kolbenachse 25 normalen Ebene erfasst. Abgesehen von der hier dargestellten Ausführung mit einem seitlichen Sensorelement 16 könnten aber natürlich auch mehrere umfangsmäßig um den Zylinder 26 verteilt angeordnete Sensorelemente 16 angeordnet werden. Gleichfalls könnten auch mehrere mit zugehörigen Sensorelementen zusammenwirkende Messansätze 13 räumlich beabstandet an der Stirnfläche des Kolbens 1 vorgesehen sein. Bezüglich der weiteren Merkmale und der Funktion der Anordnung nach den Fig. 4 und 5 wird auf die obigen Ausführungen zu Fig. 1 bis 3 verwiesen.

Bei den Ausführungen nach den Fig. 6 bis 8 sind jeweils mehrere, senkrecht zur Kolbenachse 25 beabstandete, separat von der wiederum nicht dargestellten Auswerteeinheit abfragbare Sensorelemente 16, 16' vorgesehen, was auf einfache und aussagekräftige Weise die Ermittlung bzw. Überwachung der Lage der Bewegungsbahn des Kolbens 1 in beliebiger Richtung relativ zum hier nicht dargestellten Zylinder ermöglicht. Gemäß Fig. 6 und 7 sind drei symmetrisch um die Kolbenachse 25 gruppierte gleiche Sensorelemente 16 (beispielsweise Wirbelstromsensoren) vorgesehen, die die Lage einer räumlichen Anomalie 10 (in Form einer Ausdrehung) an der Stirnseite der Kolbenstange 5 überwachen. Das Signal der Sensorelemente 16 wird dabei vorzugsweise vorweg so kalibriert, dass daraus dann die Größe und Richtung einer Abwanderung der Kolbenachse 25 relativ zum Zylinder 2 bzw. dessen Innenwand festgestellt werden kann.

Gemäß Fig. 8 weist die Indikatoreinheit 6 ein unter Bildung einer glatten Oberfläche im Bereich der Stirnfläche der Kolbenstange 5 eingesetztes Magnetelement 27 auf, das ein als magnetischer Feldsensor ausgebildetes Sensorelement 16' des Sensors 4, welches die Neigung der detektierten magnetischen Feldlinien in ein Messsignal wandelt, beeinflusst. Das weitere Sensorelement 16 kann beispielsweise wiederum als Wirbelstromsensor zur Bestimmung des Abstandes der Stirnfläche der Kolbenstange 5 im Bereich des oberen Totpunktes der Kolbenbewegung ausgebildet sein. Auch damit kann die räumliche Lage der Bewegungsbahn des Kolbens 1 relativ zum Zylinder 2 bestimmt werden.

## Patentansprüche

1. Monitor zur Überwachung der Lage der Bewegungsbahn eines Hubkolbens (1) relativ zum ihn umgebenden Zylinder (2), mit einem relativ zum Zylinder (2) im Bereich eines der Totpunkte der Kolbenbewegung feststehend angeordneten und mit einer Auswerteeinheit in Verbindung stehenden Sensor (4) und einer im Bereich der Stirnseite (11) des Kolbens (1) angeordneten Indikatoreinheit (6), welche sich im Bereich des Totpunktes der Kolbenbewegung in einem vom Sensor (4) detektierbaren und von der Auswerteeinheit zur Bestimmung der relativen Lage der Bewegungsbahn des Kolbens (1) auswertbaren seitlichen Abstand (a) zum Sensor (4) befindet, **dadurch gekennzeichnet, daß** der Sensor (4) relativ zur inneren Oberfläche des Zylinders (2) zurückgezogen angeordnet und mittels einer Abdeckung (8) zum Zylinderraum (9) hin abgedichtet ist, und dass die Indikatoreinheit (6) als verschmutzungsunempfindliche Anomalie (10, 27) ausgebildet ist.

2. Monitor nach Anspruch 1, **dadurch gekennzeichnet, daß** mehrere, senkrecht zur Kolbenachse (25) beabstandete und/oder mit senkrecht zur Kolbenachse (25) beabstandeten separaten Indikatorelementen der Indikatoreinheit (6) zusammenwirkende, separat von der Auswerteeinheit abfragbare Sensorelemente (16) vorgesehen sind.

3. Monitor nach Anspruch 2, **dadurch gekennzeichnet, daß** die Sensorelemente (16, 16') nach unterschiedlichen Messprinzipien arbeitend ausgebildet sind.

4. Monitor nach Anspruch 2 oder 3, **dadurch gekennzeichnet, daß** die Indikatoreinheit (6) als räumliche Anomalie (10) im Bereich der Stirnseite (11) des Kolbens (1) ausgebildet ist, deren relativer seitlicher Abstand (a) zu zumindest zwei, vorzugsweise als Wirbelstromsensoren ausgebildeten Sensorelementen (16) von der Auswerteeinheit zur Bestimmung der räumlichen Lage des Totpunktes der Bewegungsbahn des Kolbens (1) auswertbar ist.

5. Monitor nach Anspruch 2 oder 3, **dadurch gekennzeichnet, daß** die Indikatoreinheit (6) zumindest ein, vorzugsweise unter Bildung einer glatten Oberfläche im Bereich der Stirnseite (11) des Kolbens (1) oder der Kolbenstange (5) eingesetztes Magnetelement (27) aufweist, und daß zumindest eines der Sensorelemente (16, 16') als magnetischer Feldsensor, der die Neigung der detektierten magnetischen Feldlinien in ein Meßsignal wandelt, ausgebildet ist.

6. Monitor nach einem oder mehreren der Ansprüche 1 bis 5, **dadurch gekennzeichnet, daß** das/die Sensorelement(e) (16, 16') in einem im Zylinderkopf (7) abgedichtet eingesetzten Adapter angeordnet ist/sind.

7. Monitor nach einem oder mehreren der Ansprüche 1 bis 6, **dadurch gekennzeichnet, daß** im Bereich der Stirnseite (11) des Kolbens (1) oder der Kolbenstange (5) zumindest ein, vorzugsweise separat aufgesetzter Messansatz (13) als räumlich vorragende Indikatoreinheit (6) angeordnet ist, der im Bereich des Totpunktes der Bewegungsbahn des Kolbens (1) in zumindest eine nach außen abgedichtet in den Zylinderkopf (7) als Adapter eingesetzte Messpatrone (15) eintaucht, in welcher zumindest ein seitlich auf den Meßansatz (13) gerichtetes Sensorelement (16) angeordnet ist.

8. Monitor nach Anspruch 7, **dadurch gekennzeichnet, daß** der Messansatz (13) zumindest in dem Bereich, der im Bereich des Totpunktes der Bewegungsbahn des Kolbens (1) dem/den Sensorelement(en) (16) gegenüberliegt, in Form eines Zylinders (26) mit parallel zur Kolbenachse (25) liegender Erzeugender ausgebildet ist, wobei das/die Sensorelement(e) (16) im wesentlichen den radialen Abstand in einer zur Kolbenachse (25) normalen Ebene erfaßt (erfassen).

9. Monitor nach Anspruch 7, **dadurch gekennzeichnet, daß** der Meßansatz (13) an seiner im Bereich des Totpunktes der Bewegungsbahn des Kolbens (1) dem Sensorelement (16) zugewandten Seite eine ebene, im wesentlichen senkrecht zur Verbindungslinie zum Sensorelement (16) ausgerichtete Oberfläche aufweist.

10. Monitor nach einem der Ansprüche 7 bis 9, **dadurch gekennzeichnet, daß** die Meßpatrone (15) zumindest einen zum Zylinderraum (9) hin offenen Aufnahmekörper (17) für die zum Zylinderraum (9) abgedichtete Aufnahme des/der Sensorelement(e)s (16) aufweist, der zumindest im jeweils zwischen Sensorelement (16) und eingetauchtem Messansatz (13) liegenden Bereich membranartig dünn aus die Sensorempfindlichkeit nicht bzw. wenig beeinflussendem Material ausgebildet ist.

11. Monitor nach Anspruch 10, **dadurch gekennzeichnet, daß** bei Ausbildung des Sensorelementes (16) als Wirbelstromsensor der Aufnahmekörper (17), bzw. zumindest der membranartige Bereich (8) desselben, aus Kunststoff, vorzugsweise faserverstärkt ausgebildet ist.

12. Monitor nach Anspruch 10 oder 11, **dadurch gekennzeichnet, daß** das/jedes Sensorelement (16) im Aufnahmekörper (17) im wesentlichen hohlraumlos und den Aufnahmekörper (17) damit gegen den Zylinderdruck stützend angeordnet ist.

13. Monitor nach einem oder mehreren der Ansprüche 1 bis 12, **dadurch gekennzeichnet, daß** zur Überwachung der Abnützung von auf dem Kolben (1) angeordneten Tragringen (24) der seitliche Abstand (a) zwischen Sensor (4) und Indikatoreinheit (6) im Bereich des Totpunktes der Bewegungsbahn des Kolbens (1) als Verschleißindikator dient.
